# EUROPEAN PATENT SPECIFICATION

(11) **EP 2 175 674 B1**
(45) Date of publication and mention of the grant of the patent: **29.07.2015**
(21) Application number: 08017898.1
(22) Date of filing: 13.10.2008
(51) Int. Cl.: H04W 12/04, G06F 21/31, G06F 21/60, G06F 21/73, H04W 12/06, H04W 48/08, H04W 92/18, H04W 76/02

(54) **Method and system for paring devices**
Verfahren und System für Paarbildung der Geräte
Procédé et système pour l'appairage de dispositifs

(43) Date of publication of application: 14.04.2010
(73) Proprietor: Vodafone Holding GmbH, 40213 Düsseldorf (DE)
(72) Inventor: Hoeksel, Sebastiaan, 6229 VN Maastricht (NL); Koraichi, Najib, 6333 CT Schimmert (NL)
(74) Representative: Jostarndt, Hans-Dieter

(56) References cited:
- EP-A- 1 465 380
- EP-A- 1 770 580
- US-A1- 2005 086 493
- US-A1- 2006 045 272
- US-A1- 2007 291 946

## Description

### Technical Field

The present invention is related to a method for connecting devices. In particular, the present invention is related to a method for connecting a first device to a second device and to a system comprising a first device, which is connectable to a second device. One of the devices connectable to each other may be a mobile communication device.

### Background of the invention

Today, there is a plurality of wireless network technologies available to connect devices. Mobile communication devices such as mobile telephones can be connected to a computer by infrared light signals according to the IrDA (Infrared Data Association) standard. This type of communication is limited to short distances and requires a line of sight between the devices. Another possibility for connecting devices is a wireless radio link between the devices.

A wireless radio link may be established via wireless local are network (WLAN) or via a WiFi connection according the IEEE 802.11 standard. Another example of a wireless radio connection between devices is a connection according to the Bluetooth standard. Further alternatives for wirelessly connecting devices by radio signals are radio links for short range communication. These may be radio connection according to the ZigBee specification for communication protocols using small power digital radios based on the IEEE 802.15.4 standard or radio connections based on the near field communication (NFC) technology standardized in ISO 18092 and 21481, ECMA 340, 352 and 356, and ETSI TS 102 190.

Today many users have a plurality of devices which in principal can be connected to each other by a wireless connection of the type described before. One important aspect, when connecting two devices, is to provide a security mechanism preventing that an unauthorised third person connects a device to a device of a user in fraudulent intent.

One possible security mechanism comprises that the user enters a code into one or both of the devices he wishes to connect. However, this is cumbersome for the user, particularly-when a strong code comprising a plurality of characters is used.

US 2007/291946 A1 describes a wireless communication system in which a radio connection can be established between a first and a second communication device. For authentication, the devices execute a handshake procedure particularly comprising the verification of a key confirmation key (KCK), which is generated based on a connection key CK and random numbers generated in the devices. The CK is generated in the first device and stored in a USB memory. In order to execute the handshake procedure, the USB memory is disconnected from the first device and transferred to the second device, which reads the CK from the memory.

US 2005/086493 is related to the establishment of a radio connection between a home PC and a car-mounted computer. The car-mounted computer randomly generates an access code and stores it in a USB memory. Then, the USB memory is removed from the car-mounted computer and plugged into the home PC, which reads the access code and sends it to the car-mounted computer within a request for remote access. When the car-mounted computer receives the request, it compares the received access code with the stored one for authenticating the home PC.

US 2006/045272 describes an authentication of a terminal in a WLAN access point. For the first access of the terminal, the access point writes authentication information into a memory card. Then, the memory card is removed from the access point and inserted into the terminal. When accessing the access point, the terminal uses the authentication information for answering a challenge transmitted by the access point. After the access point has successfully verified the response to the challenge, it registers the terminal in connection with its MAC address and when the terminal accesses to the access point again, it is authenticated using a combination of the authentication information and its MAC address.

EP 1 465 380 A1 relates to a mutual authentication between two devices A and B. Device A writes authentication data (a random number) in a secure memory card 16 and the memory card is transferred to device B. Then, a mutual authentication procedure is executed between the devices using the authentication data.

EP 1 770 580 A2 describes a control point which can be used as a security console in order to manage an access control list of a controlled device. In order for the control point to acquire ownership of a controlled device, a smart card is brought into contact with a new controlled device and a public key stored in the smart card is transferred to this device. When the control point requests access to the new controlled device, it requests an electronic signature from the smartcard. The electronic signature is generated in the smartcard using a secret key stored therein and the control point transmits the electronic signature to the controlled device. The controlled device verifies the electronic signature using the public key, which has been stored therein before.

### Description of the invention

It is an object of the present invention to provide support to a user in the task of securely connecting devices.

The object is achieved by a method according to claim 1 and by a system comprising the features of claim 11. Embodiments of the method and the system are given in the dependent claims.

According to a first aspect of the invention a method for establishing a connection between a first device and a second device is provided. The method comprises the steps of:
- generating a key information in the first device and storing the key information in a memory card connected to the first device;
- storing in the first device key generation information, said key retrieving information allowing to retrieve the key information;
- disconnecting the memory card from the first device and connecting the memory card to the second device;
- transmitting authentication information obtained from the key information from the second device to the first device; and
- setting up the connection after the authentication information has been successfully verified in the first device using the key retrieving information.

According to a second aspect, the invention provides a system comprising a first device, which is connectable to a second device, and a memory card. The first device comprises a key generation means adapted to generate key information and to store key retrieving information allowing to retrieve the key information in the first device, said key information being stored in the memory card, when the memory card is connected to the first device. The second device is configured to read the key information, when the memory card is connected to the second device, and to transmit authentication information obtained from the key information to the first device. And the first device is further configured to set up a connection to the second device after the authentication information has been successfully verified in the first device using the key retrieving information.

The invention involves the idea that the connection between a first and a second device can be set up using a memory card, which is carried from the first device to the second device. In particular, the memory card comprises a key information generated in the first device, which is used to securely set up the connection and to prevent that devices are connected to the first device in fraudulent intent. The user is disburdened from controlling the establishment of the data connection to a large extent. Thus, the invention facilitates the connection set up for the user.

In one embodiment of the method and the system, the authentication information is transmitted via a communication channel from the second device to the first device and the connection between the devices is established via said communication channel.

It is an advantage of this embodiment that the communication channel for setting up the connection is initially used for authentication the second device, before a data connection for exchanging use data between the devices is established.

In a further embodiment of the method and the system, the key information is generated randomly in the first device.

This increases security, since a random generation of the key information makes it more difficult to determine or guess the key information from outside the first device. Preferably, new random key information may be generated each time a data connection between the first device and a second device is to be established.

In a further embodiment of the method and the system, the authentication information comprises the key information or a check value of the key information.
The check value may be a hash value, for example, which may be calculated using a one-way hash function.

Furthermore, in one embodiment of the method and the system, the authentication information comprises an encrypted part, which is encrypted using a first cryptographic key securely stored in the memory card, said encrypted part being verified using a second cryptographic key allocated to the first cryptographic key, said second cryptographic key being stored in the first device.
By successfully verifying the encrypted part of the authentication information, it is ensured that the second device is connected to the memory card securely storing the first cryptographic key. This prevents that a connection is established to a device disposing of a copy of the key information stored in the memory card. Here, the term "secure storage" particularly means that the first cryptographic key cannot be access by unauthorised third parties.

A related embodiment of the method and the device comprises that the encrypted part is generated in the memory card.

In particular, it is an advantage of this embodiment, that the first cryptographic key does not leave the memory card, as it might be the case, if the encrypted part of the authentication information was generated in the second device using the key. Furthermore, the second device does not need to provide cryptographic functionality.

In one embodiment of the method and the device, the key retrieving information corresponds to the key information.

In this embodiment, a duplicate of the key information may be stored in the first device for the purpose of authenticating the second device.

In a further embodiment of the method and the device, the key information is generated using random information and using a secret key, said secret key being securely stored in a storage means coupled to the first device.

In a related embodiment of the method and the device, the key retrieving information corresponds to the random information, said random information being used to re-generate the key information in order to retrieve the key information.
It is an advantage of this embodiment that the key information does not need to be stored in the first device during the time period between its generation and the verification of the authentication information. This increases security further.

Furthermore in one embodiment of the method and the system, the first device is connected to a smartcard, particularly a SIM card, said smartcard securely storing the secret key.

In a related embodiment of the method and the system, the key information is generated in the smartcard.

The term SIM card as used herein refers to a smartcard offering identification and/or authentication services to a mobile communication network. The smartcard may comprise a SIM (Subscriber Identity Module) application according to the GSM (Global System for Mobile Communications) standard, a USIM (Universal Subscriber Identity Module) according to the UMTS (Universal System for Mobile Telecommunications) standard or corresponding applications providing authentication and/or identification functions in connection with a mobile communication network.

When using such a SIM card for storing the secret key, advantage can be taken of the already existing security mechanisms of the SIM card, which also allows for a secure storage of the secret key.

For generating the key information it may also be possible to use already existing functionality of the SIM card. Moreover, it is prevented that the secret key leaves the SIM card, when the key information is generated in the SIM card. If the secret key would leave the SIM card, it could eventually be spied out.

In a further embodiment of the method and the device, the first device is a mobile communication device.

The aforementioned and other aspects of the invention will also be apparent from and elucidated with reference to the embodiments described hereinafter making reference to the drawings.

### Brief description of the drawings

Reference will be made by way of example to the accompanying drawings in which
- Fig. 1: is a schematic depiction of a system comprising a first device, which is connectable to a second device.
- Fig. 2: is a schematic depiction of an authentication process in the system shown in figure 1 in one embodiment, and
- Fig. 3: is a schematic depiction of an authentication process in the system shown in figure 1 in another embodiment.

### Detailed description of embodiments of the invention

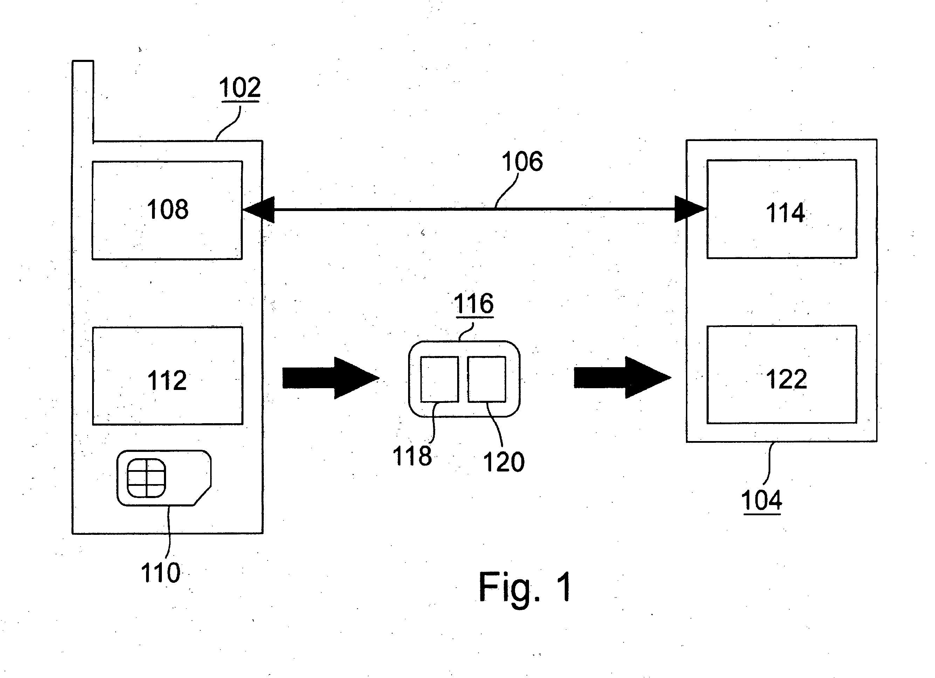

Figure 1 schematically depicts a first device 102 that can be connected to a second device 104 via a data connection 106 for exchanging data with the second device 104. In principle, the data connection 106 can be any type of connection, particularly one, which does not connect the devices 102, 104 directly via a wired data link. With such a data connection 106, the second device 104 should be authenticated in the first device 102 in order to prevent unauthorised third parties from connecting to the first device 102 in fraudulent intent.
In embodiments of the system, the data connection 106 may be a radio connection between the two devices 102, 104. For instance, the radio connection may be a Bluetooth connection based on the Bluetooth standard, which is known to a person skilled in the art. Other communication channels, which may be used, are radio connections based on a short range radio technology, such as, for example the NFC technology or the ZigBee technology. Likewise, the devices 102, 104 may be connected via an optical data connection 106, such as, for example, an infrared (IR) connection. As a further alternative, the data connection 106 may also be established via a data network to which the devices 102, 104 are connected. In particular, a secure network session for connecting the devices 102, 104 may be established after the authentication of the second device 104 in the first device 102.

In one embodiment, the first device 102 is a mobile communication device, such as, for example, a cellular phone, a PDA (personal data assistant) or the like. For connecting the first device 102 to the second device 104, it comprises a connection interface 108. The connection interface 108 is adapted to the communication channel used, i.e. it is configured according to the type of the data connection 106 between the devices 102, 104. In embodiments of the invention, the connection interface 108 may be a radio interface according to one of the radio standards described before, an infrared interface or a network interface for connecting the first device 102 to a network providing the data connection 106.
The first device 102 may further comprise a microprocessor controlling the operation of the first device 102. The microprocessor may be coupled to a memory unit that stores software programs that can be run on the microprocessor and data used in the operation of the first device 102. A user may operate the first device 102 using an input unit, such as, for example, a keypad, and a display unit, such as, for example, a monitor. The input unit and the display unit may also be coupled to the microprocessor.

In case the first device 102 is configured as a mobile communication device, it may also comprise a radio module, which allows for connecting the first device 102 to a mobile communication network via a radio access network. For instance, the mobile communication network may a GSM (global system for mobile telecommunications) or a UMTS (universal mobile telecommunications system) network.

A further component of the first device 102 may be a smartcard 110, which is inserted into the first device 102. For receiving the smartcard 110, the first device 102 may comprise a suitable card reader. The smartcard 110 comprises a microcontroller providing a secure environment for the execution of applications and the storage of data. Particularly, this means that unauthorised access to functions of the smartcard 110 and data stored therein is prevented due to the hardware design of the microcontroller and due to cryptographic mechanisms used for managing data in the microcontroller. Moreover, the smartcard 110 is physically protected against manipulations, such as, power analysis, reverse engineering etc. Accessing the functions of the smartcard 110 and data stored therein requires that the smartcard 110 authenticates the user of the first device 102. The user authentication is performed using a secret credential of the user, which is entered at the first device 102 and passed to the smartcard 110. In the smartcard 110, the credential is checked by a security mechanism, which unlocks the functions and data after having successfully verified the credential. Furthermore, it may be provided that all or some of the functions of the first device 102 are protected and have to be unlocked by the smartcard 110. The smartcard 110 may unlock these functions after having successfully verified the credential.

Preferably, the smartcard 110 is used in conjunction with a utilization of the first device 102 in the mobile communication network. In particular, the smartcard 110 may comprise an application, which provides identification and authenticating serviced to the mobile communication network. If the mobile communication network is a GSM network, the smartcard 110 is configured as a SIM (subscriber identity module) card according to the GSM standard comprising a SIM application, which provides the identification and authentication service. If the mobile communication network is a UMTS network, the smartcard 110 is configured as a UICC (universal integrated circuit card) comprising a USIM (universal subscriber identification module) application providing the identification and authentication service.

In the following the smartcard 110 is referred to as SIM card. However, the term SIM card, as used herein, is to be understood as including also smartcards 110 comprising USIM applications or corresponding applications providing authentication and/or identification functions in connection with a mobile communication network.

The second device 104 may be a personal computer (PC) of the user of the first device 102 or it may be another mobile communication device or other portable device, to which the user wishes to connect the first device 102. The second device 104 may comprise data, which the user wants to transfer to the first device 102 via the data connection 106, or the user may want to transfer data from the first device 102 to the second device 104. In a further embodiment, the second device 104 may provide certain functionality or a service to the first device 102 via the data connection 106.

The second device 104 comprises a connection interface 114 allowing connecting the second device 104 to the first device 102. The connection interface 114 corresponds to the connection interface 108 of the first device 102 and is configured according to the type of data connection 106 that is used. Furthermore, the second device 104 may dispose of a microprocessor and a memory for storing software application that can be executed in the microprocessor and for storing further data. The second device 104 may allow for interaction with the user via a suitable display unit and an input unit.

For establishing the data connection 106 between the devices 102, 104 a memory card 116 is used.

The memory card 116 comprises a memory 118 and a microcontroller 120 integrated into a housing. Preferably, the housing is small enough so that the user can carry the memory card 116 easily and that the memory card 116 can be used in connection with card readers, which are integrated into small devices. Preferably, the memory card 116 is configured according to a standard format, and may be an SD (Secure Digital) card, a CF (Compact Flash) card, a MMC (Multimedia Card) or the like. Another example of a memory card format in sense of this disclosure is a USB (Universal Serial Bus) flash memory device. The standard format may particularly determine the size and shape of the memory card 116, the configuration of its electric contacts and/or the communication protocols used in the communication with the memory card 116.

The standard compliance of the memory card 116 allows the card to be accessed by means of card reader devices, which are likewise compliant with the standard.

The memory 118 is a non-volatile storage that can be electrically erased and reprogrammed. Particularly, the memory 118 may be configured as a solid state storage unit, particularly a flash memory or as a non-flash EEPROM (Electrically Erasable Programmable Read-Only Memory). However, the person skilled in the art understands that in principle any sort of memory units may be used. The memory 118 may be constituted by one or more memory chips, which are arranged in the housing of the memory card 116. Data is stored in the memory 118 in the form of one or more files.

The microcontroller 120 and the memory 118 may reside on one single chip within the memory card 116, or the microcontroller 120 may be a separate chip connected to the memory 118. The microcontroller 120 provides functionality for accessing the memory 118 by means of devices to which the memory card 116 is connected. In particular, the microcontroller 120 implements the communication protocols used for the data exchange between the memory card 116 and a connected device.

The memory card 116 can be connected to the first device 102 and to the second device 104. For this purpose both devices 104, 106 dispose of a card reader unit 112, 122, which is adapted to a certain memory card format in such a way that it is able to receive the memory card 116. The card reader units 112, 122 may be integrated components of the devices 102, 104 or they may be connected to the devices 102, 104 via a secure connection, preferably via a wired connection.

As a further alternative, the memory card 116 may also comprise a radio interface so that the memory card can be connected to one or both of the devices 102, 104 via a suitable radio interface of the device 102, 104. However, in the following it is assumed that the memory card 116 is connected to the device 102, 104 via card reader units 112, 122 of the devices. A person skilled in the art may easily adapt the description to the embodiment, in which a radio connection is provided between the memory card 116 and one or both of the devices 102, 104.

Before the data connection 106 between the devices 102, 104 is established, the first device 102 has to authenticate the second device 104 successfully. Otherwise, the first device 102 does not allow the establishment of the data connection 106. This means that the first device 102 does not allow exchanging data with the second device 102 via the communication channel. However, in the process of authenticating the second device 102, authentication information is transmitted via the communication channel, before the data connection 106 is finally established.

The authentication is made using a key information, which is generated in the first device 102 and then stored in the memory card 116, while the memory card 116 is inserted into the card reader unit 112 of the first device 102. After the key information has been stored in the memory card 116, the user transports the memory card 116 to the second device 104 and inserts the memory card 116 into the card reader unit 122 of the second device 104. The second device 104 reads the key information from the memory card 116 and transmits authentication information, which is obtained from the key information, to the first device 102. In the first device 102, the authentication information is used to authenticate the second device 104.

If the authentication is successful, it is ensured that the first device 102 is connected to a further device, to which the memory card 116 has been connected by the user and hence to a confidential device.

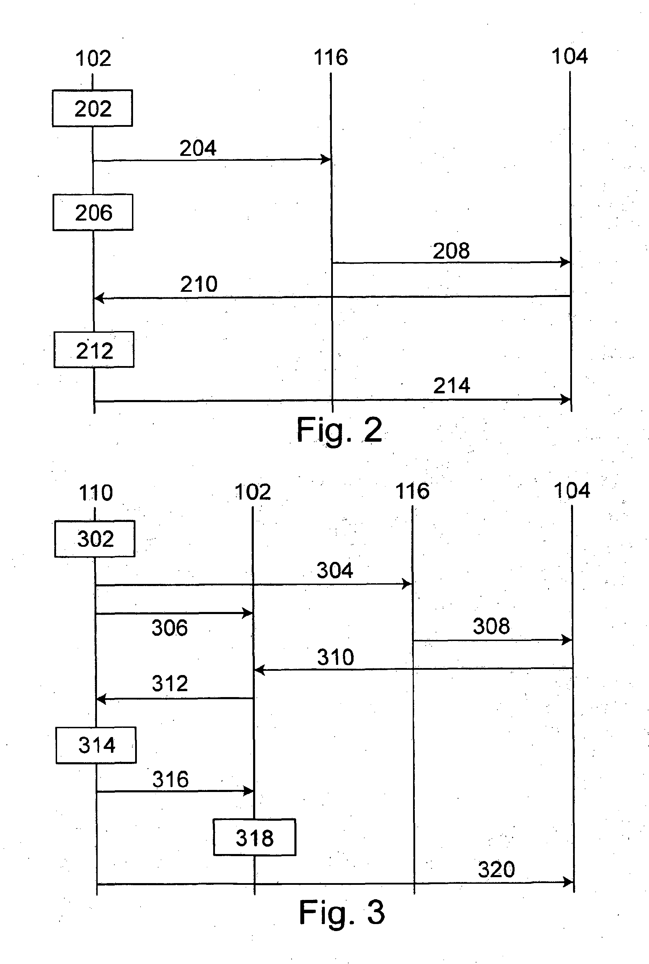

In figure 2, the process of authenticating the second device 104 in one embodiment is schematically depicted. The process starts with the generation of the key information in step 202. The key information may be a random number generated in the first device 102. For this purpose, a random number generator is implemented into the first device 102. If the first device 102 disposes of a SIM card 110 including a random number generator, the SIM card 110 may also generate the random number.

The generation of the key information is preferably initiated by the user of the first device 102 using the input unit of the first device 102. In particular, the first device 102 may provide a software application controlling the authentication process. The application may instruct the SIM card 110 to generate the key information or may generate the key information using own functionality, after having received the corresponding user command from the input unit of the device 102.

After the key information has been generated, it is stored in the memory card 116 in step 204. For this purpose, the memory card 116 has to be inserted into the card reader unit 112 of the first device 102. Furthermore, the key information is stored in the memory unit of the first device 102 as depicted in figure 2 as step 206. As alternative to the storage of the key information in the memory unit of the first device 102, the key information may be also be stored in the SIM card 110 in step 206.

The user of the first device 102 may be informed about the storage of the key information by presenting a corresponding message at the display unit of the first device 102. After the key information has been stored in the memory card 116, the user removes the memory card 116 from the card reader unit 112 of the first device 102 and carries the memory card 116 to the second device 104. Then, the user inserts the memory card 116 into the card reader unit 122 of the second device 104.

For authenticating the second device 104, the second device 104 sends authentication information to the first device in step 210, after in step 208 the authentication information has been obtained from the key information stored in the memory card 116. For transmitting the authentication information the communication channel provided for the data connection 106 is used. In particular this means that the authentication information is sent to the first device 102 by means of the connection interface 114 of the second device 104 and that the authentication information is received in the first device 102 by means of its connection interface 108.

In one embodiment, the authentication information may be sent in response to a request of the first device 102. In this embodiment, the devices to which the first device 102 can be connected via the connection interface 108 may broadcast information for identifying the devices and for connecting to the devices. The information is received in the first device 102 and the available devices may be presented to the user of the first device 102 in a list rendered at the display unit. Then, the user may select one of the devices and upon selection of one device a request for providing the authentication information may be generated in the first device 102 and transmitted to the selected device 102. This embodiment may particularly be implemented, when the data connection 106 is a Bluetooth connection or another short range radio connection and typically only a relative small number of devices are available in a certain spatial area. As an alternative, the user may enter the information for connecting to the second device 104, into the first device 102, or this information is stored in the first device 102 and is selected by the user.

In other embodiments, the second device 104 sends the authentication information without a foregoing request from the first device 102 in response to a trigger event. The trigger event may be a user command given by means of the input unit of the second device 104 or the insertion of the memory card 116 into the card reader unit 122 of the second device 104, for example. In these embodiments, the connection information for sending the authentication information may again be received from the first device 102 broadcasting this information, the user may input the connection information, or the connection information may be stored in the second device 104. Likewise, the first device 102 may store the connection information in the memory card 116 together with the key information in step 204, and the second device 104 may read the information from the memory card 116.

When the authentication information is received in the first device 102, an application of the first device 102 checks the validity of the authentication information in step 212 a way described hereinafter. When the authentication information has been verified successfully, the first device 102 finally establishes the data connection 106 to the second device 104 in step 214.

The authentication information may correspond to the key information, which the second device 104 may read from the memory card 116. In this case, the first device 102 checks the validity of the authentication information by comparing the key information received from the second device 104 in step 210 and the key information stored in the first device 102 in step 206. The second device 104 is authenticated successfully, if both key information are in agreement. As an alternative, the authentication information may comprise a check value of the key information stored in the memory card 116. The check value may be calculated in the second device 104 using the key information read from the memory card 116. In particular, the check value may be a hash code of the key information determined using a one-way hash function. In this case, the first device 102 checks the validity of the authentication information by re-generating the hash code from the stored key information using the same hash-function and by comparing the generated hash code with the hash code received from second device 104 in step 210. Here, the second device 104 is authenticated successfully, if both hash codes are in agreement.

In order to further increase the security, the memory card 116 may digitally sign the authentication information before it is sent from the second device 104 to the first device 102. For this purpose, the memory card 116 may provide a suitable application, which is executed in the microcontroller 120 of the memory card 116, when the memory card 116 is connected to second device 104. The generation of the digital signature may be initiated by a corresponding request of the second device 104, which is issued in connection with the generation of the authentication information. The digital signature is encrypted using an encryption key, which is allocated to the memory card 116 and which is securely stored in the memory card 116. The corresponding decryption key is stored in the first device 102 or in the SIM card 110 and used for verifying the digital signature. Here, the verification of the digital signature is one step in the validation of the authentication information, i.e. the data connection is only established, if the digital signature has been verified successfully. The encryption and decryption key may correspond to each other in one embodiment, in which symmetric encryption is applied. In another embodiment, in which asymmetric encryption is applied, both keys may form an asymmetric key pair.

When the digital signature can be verified successfully, it is ensured that the authentication information was sent from a device, which is connected to the memory card 116. Thus, it can be prevented that a device that disposes of a copy of the key information, but is not connected to the memory card 116, is authenticated successfully.

Instead of including a digital signature in the authentication information, the authentication information may be encrypted in the memory card 116 using its encryption key. When the first device 102 has received the encrypted authentication information in step 210, it decrypts the authentication information using the decryption key, thereby confirming that the authentication information has been encrypted in the memory card 116.

Figure 3 schematically depicts the process of authenticating the second device 104 in a further embodiment, in which cryptographic functionality of the SIM card 110 is used.

In this embodiment, the key information is generated in the SIM card 110 in step 302. For this purpose, the SIM card 110 generates a random number. Then, the random number is processed in a cryptographic algorithm to generate the key information. In the cryptographic algorithm a secret key is used, which is securely stored in the SIM card 110. Preferably, the generation of the key information is again initiated by the user of the first device 102 using the input unit of the first device 102. In particular, an application of the first device 102 may instruct the SIM card 110 to generate the key information upon a corresponding user command.

After the key information has been generated, in step 304, it is stored in the memory card 116, which is connected to the first device 102. For this purpose the SIM card 110 may pass the key information to an application of the first device 102, which stores the key information in the memory card 116. Furthermore, the random number is passed to the first device 102 and stored in the memory unit of the first device 102 in step 306.

After the key information has been stored in the memory card 116, the user removes the memory card 116 from the card reader unit 112 of the first device 102 and carries the memory card 116 to the second device 104. Then, the user inserts the memory card 116 into the card reader unit 122 of the second device 104. For authenticating the second device 104, the second device 104 sends authentication information to the first device 102 in step 310, after in step 308 the authentication information has been obtained from the key information stored in the memory card 116.

The obtaining of the authentication information and the transmittal of the authentication information to the first device 102 is done in the same way as in the embodiment described before. This means, that the steps 308 and 310 correspond to the steps 208 and 210 described before. In particular, the authentication information may be transmitted upon request of the first device 102 or without such a request, as described before. The authentication information may comprise the key information or a check value of the key information, as explained above. And furthermore, the authentication information may comprise a digital signature of the memory 116 or it may be encrypted by the memory card 116.

After having received the authentication information, the first device 102 optionally decrypts the authentication information or checks the included digital signature using the decryption key allocated to the memory card 116. Moreover, the random number that was stored in the first device 102 in step 306 is passed to the SIM card 110. The SIM card 110 processes the random number in the cryptographic algorithm using the secret key to re-generate the key information in step 314. Then, the re-generated key information is passed to the first device 102.

If the authentication information comprises the key information, in step 318, the first device 102 compares the key information received from the second device 104 with the key information received from the SIM card 110 in step 316 to authenticate the second device 104. Here, the second device 104 is authenticated successfully, if both key information are in agreement. If the authentication information comprises a check value of the key information, the first device 102 re-calculates the check value using the key information received from the SIM card 110. This check value is compared to the check value included in the authentication information and the first device 102 determines that the authentication information is valid, if both check values are in agreement.
When the authentication information has been verified successfully, the first device 102 finally establishes the data connection 106 to the second device 104 in step 320.

The embodiment of the invention described before in connection with figure 3 has the advantage that the key information is generated using a secret key, which is securely stored in the SIM card 110 and does not leave the SIM card 110. This further increases the security against fraud.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.
In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. A method for establishing a connection (106) between a first device (102) and a second device (104) comprising the following steps:
- generating a key information in the first device (102) and storing the key information in a memory card (116) connected to the first device (102);
- storing in the first device (102) key retrieving information, said key retrieving information allowing to retrieve the key information;
- disconnecting the memory card (116) from the first device (102) and connecting the memory card (116) to the second device (104);
- transmitting authentication information obtained from the key information from the second device (104) to the first device (102); and
- setting up the connection (106) after the authentication information has been successfully verified in the first device (102) using the key retrieving information.
**characterized in that** the memory card digitally signs or encrypts the authentication information using a first cryptographic key securely stored in the memory card (116) and the digital signature or the encrypted authentication information is decrypted in the first device using a second cryptographic key allocated to the first cryptographic key, said second cryptographic key being stored in the first device (102).

2. The method according to claim 1, wherein the authentication information is transmitted via a communication channel from the second device (102) to the first device (104) and the connection (106) between the devices is established via said communication channel.

3. The method according to claim 1 or 2, wherein the key information is generated randomly in the first device (102).

4. The method according to one of the preceding claims, wherein the authentication information comprises the key information or a check value of the key information.

5. The method according to one of the preceding claims, wherein the key retrieving information corresponds to the key information.

6. The method according to one of the preceding claims, wherein the key information is generated using random information and using a secret key, said secret key being securely stored in a storage means coupled to the first device (102).

7. The method according to claim 6, wherein the key retrieving information corresponds to the random information, said random information being used to re-generate the key information in order to retrieve the key information.

8. The method according to claim 6 or 7, wherein the first device (102) is connected to a smartcard (110), particularly a SIM card, said smartcard (110) securely storing the secret key.

9. The method according to one of the claims 6-8, wherein the key information is generated in the smartcard (110).

10. The method according to one of the preceding claims, wherein the first device (102) is a mobile communication device.

11. A system comprising a first device (102), which is connectable to a second device (104), and a memory card (116), wherein
- the first device (102) comprises a key generation means adapted to generate key information and to store key retrieving information allowing to retrieve the key information in the first device (102), said key information being stored in the memory card (116), when the memory card (116) is connected to the first device (102);
- the second device (104) is configured to read the key information, when the memory card (116) is connected to the second device (104), and to transmit authentication information obtained from the key information to the first device (102); and
- the first device (102) is further configured to set up a connection (106) to the second device (104) after the authentication information has been successfully verified in the first device (102) using the key retrieving information **characterized in that** the memory card is adapted to digitally sign or encrypt the authentication information using a first cryptographic key securely stored in the memory card (116) and first device is adapted to decrypt the digital signature or the encrypted authentication information using a second cryptographic key allocated to the first cryptographic key, said second cryptographic key being stored in the first device (102):

## Patentansprüche

1. Verfahren zum Aufbauen einer Verbindung (106) zwischen einer ersten Vorrichtung (102) und einer zweiten Vorrichtung (104), wobei das Verfahren die folgenden Schritte umfasst:
- Erzeugen von Schlüsselinformationen in der ersten Vorrichtung (102) und Speichern der Schlüsselinformationen in einer mit der ersten Vorrichtung (102) verbundenen Speicherkarte (116);
- Speichern von Schlüsselwiedergewinnungsinformationen in der ersten Vorrichtung (102), wobei die Schlüsselwiedergewinnungsinformationen das Wiedergewinnen der Schlüsselinformationen ermöglichen;
- Trennen der Speicherkarte (116) von der ersten Vorrichtung (102) und Verbinden der Speicherkarte (116) mit der zweiten Vorrichtung (104);
- Senden von Authentifizierungsinformationen, die aus den Schlüsselinformationen erhalten werden, von der zweiten Vorrichtung (104) an die erste Vorrichtung (102); und
- Herstellen der Verbindung (106), nachdem die Authentifizierungsinformationen in der ersten Vorrichtung (102) unter Verwendung der Schlüsselwiedergewinnungsinformationen erfolgreich verifiziert worden sind,
**dadurch gekennzeichnet, dass** die Speicherkarte die Authentifizierungsinformationen unter Verwendung eines ersten kryptographischen Schlüssels, der in der Speicherkarte (116) sicher gespeichert ist, digital signiert oder verschlüsselt und die digitale Signatur oder die verschlüsselten Authentifizierungsinformationen unter Verwendung eines zweiten kryptographischen Schlüssels, der dem ersten kryptographischen Schlüssel zugeordnet ist, in der ersten Vorrichtung entschlüsselt werden, wobei der zweite kryptographische Schlüssel in der ersten Vorrichtung (102) gespeichert ist.

2. Verfahren nach Anspruch 1, wobei die Authentifizierungsinformationen über einen Kommunikationskanal von der zweiten Vorrichtung (102) an die erste Vorrichtung (104) gesendet werden und die Verbindung (106) zwischen den Vorrichtungen über den Kommunikationskanal aufgebaut wird.

3. Verfahren nach Anspruch 1 oder 2, wobei die Schlüsselinformationen in der ersten Vorrichtung (102) zufällig erzeugt werden.

4. Verfahren nach einem der vorhergehenden Ansprüche, wobei die Authentifizierungsinformationen die Schlüsselinformationen oder einen Prüfwert der Schlüsselinformationen umfassen.

5. Verfahren nach einem der vorhergehenden Ansprüche, wobei die Schlüsselwiedergewinnungsinformationen den Schlüsselinformationen entsprechen.

6. Verfahren nach einem der vorhergehenden Ansprüche, wobei die Schlüsselinformationen unter Verwendung zufälliger Informationen und unter Verwendung eines geheimen Schlüssels erzeugt werden, wobei der geheime Schlüssel in einem mit der ersten Vorrichtung (102) gekoppelten Speichermittel sicher gespeichert ist.

7. Verfahren nach Anspruch 6, wobei die Schlüsselwiedergewinnungsinformationen den zufälligen Informationen entsprechen, wobei die zufälligen Informationen zum Neuerstellen der Schlüsselinformationen, um die Schlüsselinformationen wiederzugewinnen, verwendet werden.

8. Verfahren nach Anspruch 6 oder 7, wobei die erste Vorrichtung (102) mit einer Chipkarte (110), insbesondere mit einer SIM-Karte, verbunden ist, wobei die Chipkarte (110) den geheimen Schlüssel sicher speichert.

9. Verfahren nach einem der Ansprüche 6-8, wobei die Schlüsselinformationen in der Chipkarte (110) erzeugt werden.

10. Verfahren nach einem der vorhergehenden Ansprüche, wobei die erste Vorrichtung (102) eine Mobilkommunikationsvorrichtung ist.

11. System, das eine erste Vorrichtung (102), die mit einer zweiten Vorrichtung (104) verbunden werden kann, und eine Speicherkarte (116) umfasst, wobei
- die erste Vorrichtung (102) ein Schlüsselerzeugungsmittel umfasst, das dafür ausgelegt ist, Schlüsselinformationen zu erzeugen und Schlüsselwiedergewinnungsinformationen, die das Wiedergewinnen der Schlüsselinformationen ermöglichen, in der ersten Vorrichtung (102) zu speichern, wobei die Schlüsselinformationen in der Speicherkarte (116) gespeichert werden, wenn die Speicherkarte (116) mit der ersten Vorrichtung (102) verbunden ist;
- die zweite Vorrichtung (104) dafür konfiguriert ist, die Schlüsselinformationen zu lesen, wenn die Speicherkarte (116) mit der zweiten Vorrichtung (104) verbunden ist, und Authentifizierungsinformationen, die aus den Schlüsselinformationen erhalten werden, an die erste Vorrichtung (102) zu senden; und
- die erste Vorrichtung (102) ferner dafür konfiguriert ist, eine Verbindung (106) mit der zweiten Vorrichtung (104) herzustellen, nachdem die Authentifizierungsinformationen unter Verwendung der Schlüsselwiedergewinnungsinformationen in der ersten Vorrichtung (102) erfolgreich verifiziert worden sind,
**dadurch gekennzeichnet, dass** die Speicherkarte dafür ausgelegt ist, die Authentifizierungsinformationen unter Verwendung eines ersten kryptographischen Schlüssels, der in der Speicherkarte (116) sicher gespeichert ist, digital zu signieren oder zu verschlüsseln, und die erste Vorrichtung dafür ausgelegt ist, die digitale Signatur oder die verschlüsselten Authentifizierungsinformationen unter Verwendung eines zweiten kryptographischen Schlüssels, der dem ersten kryptographischen Schlüssel zugeordnet ist, zu entschlüsseln, wobei der zweite kryptographische Schlüssel in der ersten Vorrichtung (102) gespeichert ist.

## Revendications

1. Méthode d'établissement d'une connexion (106) entre un premier dispositif (102) et un deuxième dispositif (104) comprenant les étapes suivantes :
- génération d'une information clé sur le premier dispositif (102) et stockage de l'information clé sur une carte mémoire (116) connectée au premier dispositif (102) ;
- stockage sur le premier dispositif (102) de l'information de récupération clé, ladite information de récupération clé permettant de récupérer l'information clé ;
- déconnexion de la carte mémoire (116) du premier dispositif (102) et connexion de la carte mémoire (116) au deuxième dispositif (104) ;
- transmission des informations d'authentification issues de l'information clé entre le deuxième dispositif (104) et le premier dispositif (102) ; et
- configuration de la connexion (106) après vérification réussie des informations d'authentification sur le premier dispositif (102) à l'aide de l'information de récupération clé.
qui se **caractérise par le fait que** la carte mémoire signe ou crypte numériquement les informations d'authentification au moyen d'une première clé cryptographique conservée en sécurité sur la carte mémoire (116), et que la signature numérique ou les informations d'authentification cryptées sont décryptées sur le premier dispositif à l'aide d'une deuxième clé cryptographique associée à la première clé cryptographique, ladite deuxième clé cryptographique étant stockée sur le premier dispositif (102).

2. Selon la revendication 1, la méthode permet de transmettre les informations d'authentification via un canal de communication entre le deuxième dispositif (102) et le premier dispositif (104), et d'établir la connexion (106) entre les dispositifs via ledit canal de communication.

3. Selon la revendication 1 ou 2, la méthode génère de façon aléatoire l'information clé sur le premier dispositif (102).

4. Selon l'une des précédentes revendications, la méthode implique des informations d'authentification comprenant l'information clé ou une valeur de contrôle de l'information clé.

5. Selon l'une des revendications précédentes, la méthode comporte une information de récupération clé correspondant à l'information clé.

6. Selon l'une des revendications précédentes, la méthode comporte une information clé générée à l'aide d'une information aléatoire et d'une clé secrète, ladite clé secrète étant conservée en sécurité sur un support de stockage associé au premier dispositif (102).

7. Selon la revendication 6, la méthode comporte une information de récupération clé correspondant à l'information aléatoire, ladite information aléatoire servant à re-générer l'information clé afin de récupérer l'information clé.

8. Selon la revendication 6 ou 7, la méthode permet de connecter le premier dispositif (102) à une carte à puce (110), plus particulièrement une carte SIM, ladite carte à puce (110) conservant la clé secrète en sécurité.

9. Selon la revendication 6, 7 ou 8, la méthode permet de générer l'information clé sur la carte à puce (110).

10. Selon l'une des précédentes revendications, le premier dispositif de la méthode (102) est un dispositif de communication mobile.

11. Système comprenant un premier dispositif (102), qui peut être connecté à un deuxième dispositif (104), et une carte mémoire (116), selon lequel
- le premier dispositif (102) comporte un moyen de génération de clé adapté pour générer une information clé et stocker l'information de récupération clé afin de récupérer l'information clé sur le premier dispositif (102.), ladite information clé étant stockée sur la carte mémoire (116), lorsque la carte mémoire (116) est connectée au premier dispositif (102);
- le deuxième dispositif (104) est configuré pour lire l'information clé, lorsque la carte mémoire (116) est connectée au deuxième dispositif (104), et pour transmettre les informations d'authentification issues de l'information clé vers le premier dispositif (102) ; et
- le premier dispositif (102) est configuré pour établir une connexion (106) avec le deuxième dispositif (104) après vérification réussie des informations d'authentification sur le premier dispositif (102) à l'aide de l'information de récupération clé
qui se **caractérise par le fait que** la carte mémoire est adaptée pour signer ou crypter numériquement les informations d'authentification au moyen d'une première clé cryptographique conservée en sécurité sur la carte mémoire (116), et que le premier dispositif est adapté pour décrypter la signature numérique ou les informations d'authentification cryptées à l'aide d'une deuxième clé cryptographique associée à la première clé cryptographique, ladite deuxième clé cryptographique étant stockée sur le premier dispositif (102).
